# EUROPÄISCHE PATENTSCHRIFT

(11) **EP 2 398 925 B1**
(45) Veröffentlichungstag und Bekanntmachung des Hinweises auf die Patenterteilung: **29.05.2019**
(21) Anmeldenummer: 10709445.0
(22) Anmeldetag: 18.02.2010
(51) Int. Cl.: C21D 1/10, C21D 1/42, C21D 1/673, C21D 9/00, C21D 9/32, C21D 9/34, C21D 9/40

(54) **HÄRTEMASCHINE UND VERFAHREN ZUM INDUKTIVEN FIXTURHÄRTEN**
QUENCHING MACHINE AND METHOD FOR FIXTURE QUENCHING BY INDUCTION
MACHINE DE TREMPE ET PROCÉDÉ DE DURCISSEMENT SOUS CONTRAINTE PAR INDUCTION

(30) Priorität: 19.02.2009 DE 102009001012
(43) Veröffentlichungstag der Anmeldung: 28.12.2011
(73) Patentinhaber: Ema Indutec GmbH, 74909 Meckesheim (DE)
(72) Erfinder: GOY, Wilfried, 65451 Kelsterbach (DE); DÖRING, Torsten, 74889 Sinsheim (DE); SCHNEIDER, Frank, 64743 Beerfelden (DE)
(74) Vertreter: Sommer, Peter
(86) Internationale Anmeldenummer: PCT/EP2010/052032
(87) Internationale Veröffentlichungsnummer: WO 2010/094735

(56) Entgegenhaltungen:
- WO-A1-2007/060905
- DE-A1- 2 021 867
- DE-A1- 3 307 041
- FR-A1- 2 593 192
- JP-A- 56 084 417
- JP-A- 58 217 627
- RU-C2- 2 207 385
- US-A- 3 007 823
- US-A- 4 844 427

## Beschreibung

### Technisches Gebiet

Die Erfindung betrifft eine Härtemaschine und ein Verfahren zum induktiven Fixturhärten mit integriertem Induktor zum Erwärmen und Anlassen eines Werkstücks innerhalb der Härtemaschine.

### Stand der Technik

Das Fixturhärten, im Stand der Technik teilweise auch als Presshärten bezeichnet, ist ein vor allem in der Autoindustrie weit verbreitetes Verfahren. Üblicherweise werden derartige Härtemaschinen manuell oder vollautomatisch mit schon erwärmten Werkstücken beschickt, welche nach dem Fixturhärten manuell oder vollautomatisch in einen Anlassofen transportiert werden.

Aus der DE 40 04 295 A1 ist eine derartige Härtemaschine bekannt, bei der ein bereits erwärmtes Werkstück von einer in der Härtemaschine befindlichen Matrize mit Pressstempel und/oder Spreizdorn aufgenommen wird. Zum Fixturhärten wird das in der Matrize aufgenommene Werkstück mittels eines das Werkstück umströmenden Kühlmediums abgeschreckt. DE 2 21 867 offenbart eine Härtepresse und Induktionserwärmung für Zahnkränze. Ein Ofen zum Erwärmen des Werkstücks für das Fixturhärten ist beispielsweise aus der DE 199 47 482 A1 bekannt. Diese Schrift offenbart einen Drehherdofen zum Aufkohlen von Werkstücken, die dann heiß einer Härtepresse zugeführt und dort abgeschreckt werden.

Für dieses dem Fixturhärten vorgeschaltete separate Erwärmen des Werkstücks sind aus dem Stand der Technik verschiedene Methoden bekannt, wie beispielsweise auch Flammen- oder Gaserwärmung oder induktives Erwärmen.

Aus der DE 10 2006 030 509 A1 ist bekannt, ein zuvor umgeformtes Blechteil während eines Härteprozesses zu fixieren und einen Energieeintrag durch Induktion in lokal begrenzten Bereichen vorzunehmen.

Bei einer Fixturhärteeinrichtung, die als Teil der Kalibriereinrichtung einen Kalibrierdorn aufweist, besteht das Problem, dass das Werkstück beim Abkühlen während des Fixturhärtens auf diesen Kalibrierdorn aufschrumpft und nur durch Kraftaufwand und unter Materialverschleiß wieder von diesem gelöst werden kann.

Ein bekannter Lösungsansatz ist das Verwenden eines Spreizdorns als Kalibrierdorn. Da das Werkstück beim Fixturhärten an dem gespreizten Spreizdorn gehalten wird und also auf den gespreizten Spreizdorn aufschrumpft, kann durch Entspannen des Spreizdorns nach abgeschlossenem Fixturhärten ein Spiel zwischen dem Spreizdorn und dem Werkstück entstehen und so das Werkstück leichter vom Spreizdorn gelöst werden.

Allerdings haben entsprechende Ausführungsformen von Härtepressen mit einem Spreizdorn als Teil der Kalibriereinrichtung den Nachteil, dass sie sehr störanfällig sind.

Der Erfindung liegt also die Aufgabe zugrunde, eine Vorrichtung und ein dazugehöriges Verfahren bereitzustellen, mit welcher die Verfahrensschritte der bisherigen mehrteiligen Prozesslinie, bestehend im wesentlichen aus Drehherdofen, mehreren Transportsystemen, Fixturhärtemaschine, Anlassofen, Wascheinrichtung und Ölkühlung wirtschaftlicher durchführbar sind. Wenn darüber hinaus der Materialverschleiß des Kalibrierdorns verringert wird, ist damit ein kostengünstigeres Fixturhärten möglich.

### Darstellung der Erfindung

Die vorliegende Erfindung betrifft eine Härtemaschine zum Fixturhärten, die einen Induktor aufweist, mit dem ein in die Härtemaschine eingebrachtes Werkstück erwärmt werden Die Erfindung ist in den Ansprüchen dargestellt. Die Härtemaschine zum Fixturhärten weist eine Werkstückhalterung für das Werkstück, eine Kühlvorrichtung zum Abschrecken des erwärmten Werkstücks und eine Kalibriereinrichtung mit einer oder mehreren Kalibrierformen zum Kalibrieren des Werkstücks während des Abkühlvorgangs auf und der Induktor ist vorteilhafterweise so ausgebildet, dass er relativ zu der einen oder den mehreren Kalibrierformen der Kalibriereinrichtung in zwei Stellungen bringbar ist. Aus einer ersten entfernten Stellung kann er in eine zweite Stellung gebracht werden, in der der Induktor mit dem in die Härtemaschine eingebrachten und fixturgehärteten Werkstück, das zumindest an einem Teil der einen oder mehreren Kalibrierformen der Kalibriereinrichtung gehalten wird, so zusammenwirkt, dass das in dieser Position befindliche Werkstück mittels des Induktors erwärmbar ist.

Der in der Härtemaschine vorhandene Induktor macht einen zusätzlichen Anlassofen und/oder einen zusätzlichen dem Fixturhärten vorgeschalteten Ofen für das Erwärmen des Werkstücks überflüssig. Daher ist sowohl ein Handhabungssystem eines erwärmten Werkstücks zum Transport eines Werkstücks vom Ofen zur Härtemaschine, als auch ein Handhabungssystem zum Transport eines Werkstücks von der Härtemaschine zum Anlassofen nicht mehr erforderlich. Vorteilhafterweise weist die Kalibriereinrichtung einen Kalibrierdorn zum Kalibrieren des Werkstücks während des Abkühlvorgangs auf und der Induktor wirkt vorteilhafterweise mit dem in die Härtemaschine eingebrachten und fixturgehärteten Werkstück, das an dem Kalibrierdorn gehalten wird, so zusammen, dass das Werkstück auf dem Kalibrierdorn mittels des Induktors erwärmbar ist.

Dies ermöglicht es, ein durch das beim Fixturhärten auf den Kalibrierdorn aufgeschrumpftes Werkstück ohne wesentliche Abnutzung des Kalibrierdorns und ohne Beschädigung der kalibrierten Fläche des Werkstücks ohne wesentlichen Kraftaufwand von dem Kalibrierdorn zu lösen.

Vorteilhafterweise kann eine Werkstückhalterung vorgesehen und der Induktor so in der Härtemaschine angeordnet sein, dass das in der Werkstückhalterung gehaltene Werkstück mittels des Induktors erwärmbar ist.

Dies hat den Vorteil, dass es einen weiteren Ofen zum Erwärmen des Werkstücks vor dem Fixturhärten und ein Handhabungssystem zum Transport des erwärmten Werkstücks aus dem weiteren Ofen in die Härtemaschine überflüssig macht.

Vorteilhafterweise kann entweder der Induktor zur Erwärmung des Werkstücks zumindest teilweise um das Werkstück herum angeordnet oder das Werkstück in die Nähe des Induktors bringbar sein.

Je nach Form des Werkstücks und entsprechend geeigneter Bauart des Induktors, ist es vorteilhafter, den Induktor zum Erwärmen zum Werkstück hin zu bewegen oder das Werkstück zum Induktor zu bringen.

Vorteilhafterweise ist das an der Werkstückhalterung gehaltene Werkstück und/oder das zumindest an einem Teil der einen oder mehreren Kalibrierformen der Kalibriereinrichtung gehaltene Werkstück drehbar, wobei die Drehzahl konstant oder variabel einstellbar ist.

Dies hat den Vorteil, dass eine gleichmäßige Erwärmung des Werkstücks auch dann relativ schnell erreicht werden kann, auch wenn der Induktor gegebenenfalls nicht ganz um das Werkstück herum reicht. Auch das Abkühlen kann gleichmäßiger und schneller erreicht werden, wenn eine Kühlvorrichtung vorgesehen wird.

Vorteilhafterweise weist die Härtemaschine eine Kühlvorrichtung mit einem Kühlmittel, insbesondere Kühlwasser oder eine Kühlemulsion auf Wasserbasis, auf.

Ein Kühlmittel auf Wasserbasis hat den Vorteil, dass das Werkstück nach dem Abschrecken nicht gewaschen werden muss, wie es bei auf Öl basierenden Kühlflüssigkeiten nötig ist. Eine auf Wasser basierende Kühlemulsion kann ohne zu verstopfen über kleinere Kanäle verteilt werden als eine auf Öl basierende Kühlflüssigkeit.

Vorteilhafterweise weist zumindest ein Teil der Kalibriereinrichtung und/oder der Werkstückhalterung Kanäle für das Kühlmittel auf. Dies ermöglicht ein schnelles und gleichmäßiges Abkühlen des Werkstücks, insbesondere auch von dünnwandigen Werkstücken oder Werkstücken mit unterschiedlichen Materialstärken, wie es beispielsweise bei Tellerrädern der Fall ist.

Vorteilhafterweise können die Kanäle für das Kühlmittel der Kalibriereinrichtung und/oder der Werkstückhalterung unabhängig voneinander durchströmt werden.

Vorteilhafterweise ist der Induktor je nach Formgebung des Werkstücks als Ringinduktor mit einer oder mehreren Windungen oder als Halbschaleninduktor ausgeformt. Die Ausgestaltung des Induktors richtet sich nach der Geometrie des Werkstücks. Je nach der Form des Werkstücks kann es vorteilhafter sein, also zu einer schnelleren und homogeneren Erwärmung des Werkstücks führen, je nachdem, ob ein Ring oder einen Halbschaleninduktor verwendet wird.

Vorteilhafterweise kann ein Schußinduktor die Form einer Halbschale aufweisen.

Vorteilhafterweise ist der Kalibrierdorn glatt oder verzahnt, wobei bei einem verzahnten Kalibrierdorn die Verzahnung mindestens einen Zahngrund und/oder mindestens eine Zahnflanken des zu kalibrierenden Werkstücks abstützt.

Die Ausgestaltung des Kalibrierdorns richtet sich nach der Ausformung des Werkstücks. Beispielsweise ist es bei Werkstücken mit einer ungleichmäßigen Innenkontur mit ungleichmäßig verteilten Zähnen und größeren Lücken zwischen einzelnen Zähnen von Vorteil, einen verzahnten Kalibrierdorn zu verwenden, da aufgrund der Hohlräume zwischen einem glatten Kalibrierdorn und dem Werkstück im Bereich der Lücken die Rundheit des Werkstücks nach dem Fixturhärten beeinträchtigt sein kann.

Vorteilhafterweise kann der Kalibrierdorn als Spreizdorn ausgeführt sein. Bei der Ausgestaltung des Kalibrierdorns, die sich nach der Ausformung des Werkstücks richtet, kann ein Spreizdorn auch das Spannen einer komplizierteren Innengeometrie des Werkstücks ermöglichen, die an einem festen Kalibrierdorn nicht mehr oder nicht mehr so einfach gehalten werden könnte.

Das erfindungsmäßige Verfahren zum Fixturhärten eines in eine Härtemaschine eingebrachten Werkstücks sieht vor, dass das in die Härtemaschine eingebrachte Werkstück mittels Induktion erwärmt wird.

Dabei wird das in der Härtemaschine von einem Kalibrierdorn gehaltene fixturgehärtete Werkstück mittels Induktion erwärmt und dadurch gegenüber dem Kalibrierdorn aufgeweitet, so dass gegenüber dem Kalibrierdorn ein Spiel vorliegt.

Dies hat den Vorteil, dass sich das auf den Kalibrierdorn aufgeschrumpfte Werkstück ohne Materialverschleiß des Kalibrierdorns von diesem löst und nicht wie üblich mit Kraftaufwand vom Kalibrierdorn herunter geschoben werden muss.

Weiterhin kann der Verfahrensschritt des Transports des Werkstücks von einem Ofen zum Erwärmen des Werkstücks zu einer herkömmlichen Härtemaschine und/oder des Transports von der Härtemaschine zu einem Anlassofen eingespart werden.

Vorteilhafterweise wird das in der Härtemaschine zumindest von einem Teil einer Kalibriereinrichtung, vorzugsweise von einem Kalibrierdorn, gehaltene fixturgehärtete Werkstück mittels Induktion auf eine Anlasstemperatur erwärmt.

Dies hat den Vorteil gegenüber üblichen Verfahren, dass ein Transport des Werkstücks von der Härtemaschine in einen Anlassofen, also ein kompletter Verfahrensschritt entfällt.

Vorteilhafterweise wird das Werkstück vor dem Fixturhärten in einer Werkstückhalterung der Härtemaschine gehalten und mittels Induktion erwärmt.

Dies hat den Vorteil, dass der Verfahrensschritt eines Transports von einem extra Ofen zum Erwärmen des Werkstücks zur Härtemaschine entfällt.

Vorteilhafterweise wird das Werkstück während des Erwärmens gedreht.

Dies hat den Vorteil einer schnelleren gleichmäßigen Erwärmung.

### Kurzbeschreibung der Zeichnung

Ein Ausführungsbeispiel der Erfindung ist in der Zeichnung dargestellt. Es zeigt die
- Fig. 1: eine Ansicht einer erfindungsmäßigen Härtemaschine mit eingebrachtem Werkstück, die
- Fig. 2: eine Schnittzeichnung eines Teils der Härtemaschine nach Fig. 1 vor dem Einlegen des Werkstücks, die
- Fig. 3: ein in die Härtemaschine eingebrachtes Werkstück, die
- Fig. 4: das in die Härtemaschine eingebrachte fixturgehärtete Werkstück nach Fig. 3, die
- Fig. 5: das fixturgehärtete, auf einen Kalibrierdorn aufgeschrumpfte Werkstück nach Fig. 4, welches auf Anlasstemperatur erwärmt wird, die
- Fig. 6: das fixturgehärtete und angelassene Werkstück nach Fig.5 vor der Entnahme, die
- Fig. 7: eine spezielle Kalibrierform.

### Ausführungsbeispiel

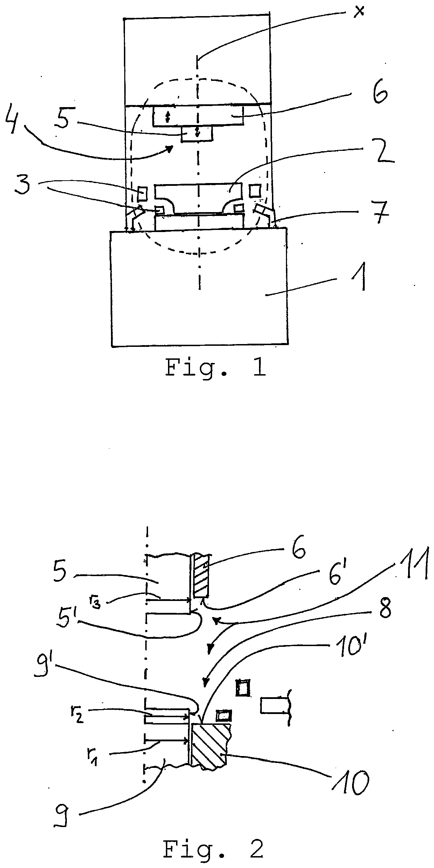

Fig. 1 zeigt eine Härtemaschine 1 mit einem in die Härtemaschine eingebrachten Werkstück 2. Ein von einem Kühlmittel durchströmter hohler Induktor 3 ist zumindest teilweise um das Werkstück 2 herum angeordnet. Eine Kalibriereinrichtung 4 mit einem auf und ab bewegbaren, innen liegenden Kalibrierdorn 5 befindet sich in einem Abstand oberhalb des Werkstücks 2 und ist von einem auf und ab bewegbaren Niederhalter 6 umgeben. Weiterhin umfasst die Härtemaschine 1 eine Kühlvorrichtung 7 in Form einer Abschreck- und Brausevorrichtung zum Abkühlen des Werkstücks 2. Induktor 3, Kalibriereinrichtung 4 und Kühlvorrichtung 7 sind um eine gemeinsame Achse x angeordnet, um die auch das Werkstück 2 positioniert wird.

Der in Fig. 2 ohne das Werkstück 2 vergrößert dargestellte Teil der Härtemaschine 1 aus Fig. 1 zeigt die Werkstückhalterung 8, die einen Haltedorn 9 mit einer Haltefläche 9' für das Werkstück und einer Haltedornführung 10, auf der eine Auflagefläche 10' angeordnet ist, umfasst. Der Haltedorn 9 weist im Bereich der Haltedornführung 10 einen Radius r1 und im Bereich der Haltefläche 9' einen Radius r2 auf, wobei r1 größer oder gleich r2 ist.

Der Kalibrierdorn 5 weist eine Kalibrierfläche 5' mit einem Radius r3 auf. Der Niederhalter 6 hat eine Auflagefläche 6' .

Zur Kalibriereinrichtung 4 gehören in diesem Ausführungsbeispiel drei Kalibrierformen 11 in Form der Auflagefläche 10', des Kalibrierdorns 5 und des Niederhalters 6.

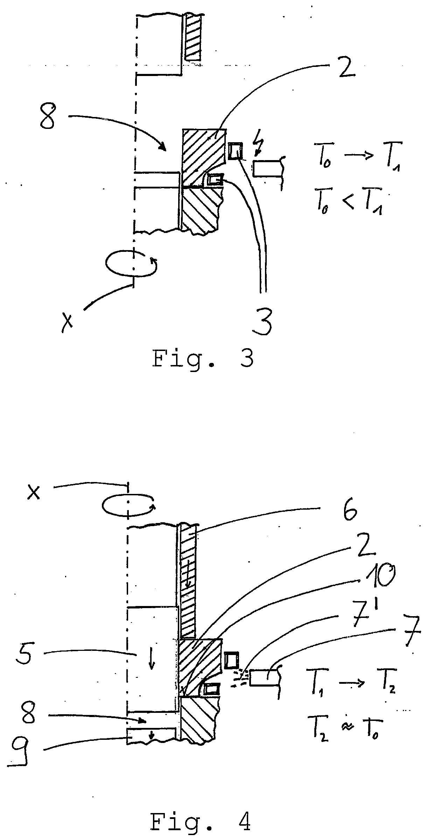

Fig. 3 zeigt ein in die Härtemaschine 1 aus Fig. 1 eingebrachtes, in der Werkstückhalterung 8 gehaltenes Werkstück 2, welches mittels des Induktors 3 von einer Ausgangstemperatur T0 auf eine Temperatur T1 erwärmt wird. Während des Erwärmens dreht sich der das Werkstück 2 haltende Teil der Werkstückhalterung 8, so dass sich das von dem sich drehenden Teil der Werkstückhalterung 8 gehaltene Werkstück 2 relativ zu dem Induktor 3 mit einer geeigneten Drehzahl um die Achse x dreht.

Nach dem induktiven Erwärmen wird das Werkstück 2, wie in Fig. 4 dargestellt, mit dem Kalibrierdorn 5 und dem Niederhalter 6 in Kontakt gebracht, wobei der Haltedorn 9 der Werkstückhalterung 8 vorher nach unten entfernt wurde und das Werkstück 2 weiterhin an der Auflagefläche 10' der Werkstückhalterung 8 gehalten wird. So wird das Werkstück zum Fixturhärten an der Kalibriereinrichtung 4 bestehend aus Auflagefläche 10', Kalibrierdorn 5 und Niederhalter 6 gehalten und mittels eines Kühlmittels 7' der Kühlvorrichtung 7 auf eine Temperatur T2 abgeschreckt, wobei während des Abschreckens der Kalibrierdorn 5, die Niederhalter 6 und die Haltedornführung 10 mit der Haltefläche 10' gedreht wird, so dass sich auch das Werkstück relativ zur Kühlvorrichtung 7 mit einer geeigneten Drehzahl um die Achse x dreht und das Werkstück durch die Auflagefläche 10' und der Niederhalter 6 mit Druck beaufschlagt ist.

Das Werkstück 2 schrumpft durch das mit dem Abschrecken einhergehende Schrumpfen auf den Kalibrierdorn 5 auf. Als Kühlmittel 7' wird insbesondere Kühlwasser oder eine Kühlemulsion auf Wasserbasis verwendet.

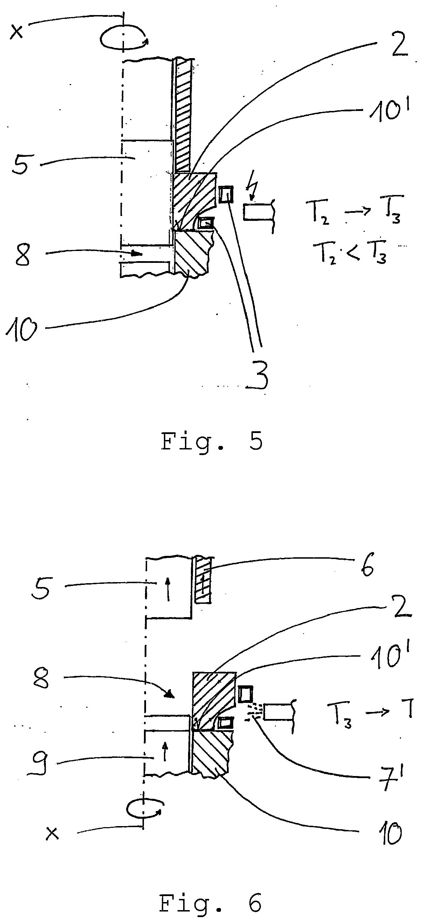

In Fig. 5 wird das auf dem Kalibrierdorn 5 aufgeschrumpfte Werkstück 2 zum Anlassen mittels des Induktors 3 auf eine Anlasstemperatur T3 erwärmt, wobei sich der Kalibrierdorn 5 und die Haltedornführung 10 mit der Auflagefläche 10' der Werkstückhalterung 8 während des Erwärmens drehen, so dass sich das Werkstück 2 relativ zu dem Induktor 3 mit einer geeigneten Drehzahl um die Achse x dreht. Durch die Ausdehnung des Werkstücks 2 aufgrund der Erwärmung ergibt sich ein Spiel gegenüber dem Kalibrierdorn 5.

Dadurch kann, wie in Fig. 6 dargestellt, der Kalibrierdorn 5 ohne wesentliche Abnutzung des Kalibrierdorns 5 und ohne Beschädigung der kalibrierten Fläche des Werkstücks 2 ohne wesentlichen Kraftaufwand nach oben entfernt werden, wobei das Werkstück 2 an der an der Haltedornführung 10 angeordneten Auflagefläche 10' gehalten wird. Der von oben kommende Niederhalter 6 wird ebenfalls entfernt und ein seitliches Abrutschen wird durch den von unten eingebrachten Haltedorn 9 verhindert. In dieser Lage wird das Werkstück mittels des Kühlmittels 7' auf die Temperatur T0 abgekühlt, wobei sich der Teil der Werkstückhalterung 8 an dem das Werkstück 2 gehalten wird dreht, so dass sich auch das Werkstück 2 gegenüber der Kühlvorrichtung 7 mit einer geeigneten Drehzahl um die Achse x dreht.

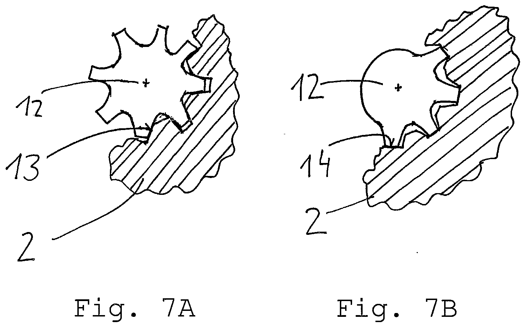

In Fig. 7 ist ein Werkstück 2 auf einem verzahnter Kalibrierdorn 12 dargestellte. Eine solche Verzahnung kann eine vorteilhafte Ausführungsform des Kalibrierdorns 5 aus Fig. 1 als Teil einer Kalibriereinrichtung 4 aus Fig. 1 sein.

Beispielsweise ist ein verzahnter Kalibrierdorn 12 gegenüber einem glatten Kalibrierdorn von Vorteil, wenn die Genauigkeit der Verzahnung des Werkstücks wichtig ist.

Aber auch bei einer ungleichmäßigen Innenkontur des Werkstücks mit unregelmäßiger Verzahnung ist ein verzahnter Kalibrierdorn 12 vorteilhaft, da bei einer unregelmäßigen Verzahnung des Werkstücks, etwa bei einer Schiebemuffe, unregelmäßig größere Hohlräume zwischen dem Werkstück und einem glatten Kalibrierdorn auftreten, die die Rundheit des Werkstücks nach dem Fixturhärten beeinflussen können. Durch die Verwendung eines entsprechend verzahnten Kalibrierdorns können solche Hohlräume vermieden werden, so dass das Werkstück während des Fixturhärtens ausreichend fixiert ist und die Rundheit des fixturgehärteten Werkstücks nicht beeinträchtigt wird.

Der in Teil A der Fig. 7 dargestellte verzahnte Kalibrierdorn 12 stützt mehrere Zahnflanken 13 des Werkstücks 2 ab, während der in Teil B dargestellte verzahnte Kalibrierdorn 12 mehrere Zahngründe 14 des Werkstücks 2 abstützt.

Gerade bei dem verzahnten Kalibrierdorn kann der Verschleiß durch das Anlassen in der Fixturhärtemaschine verringert werden.

Die Ausgestaltung der einen oder mehreren Kalibrierformen, des Induktors, der Werkstückhalterung sowie des Niederhalters sind an die Werkstückgeometrie angepasst und bei anderer Geometrie des Werkstücks erfolgt eine Anpassung der Geometrie dieser Bauteile.

So kann es auch vorteilhaft sein, beispielsweise eine oberhalb des Werkstücks angeordnete Kalibrierform aus zwei getrennten Pressbacken vorzusehen und diese beiden Pressbacken zeitlich nacheinander nach unten an das Werkstück heran zu fahren. Eine solche Ausführungsvariante ermöglicht es beispielsweise die durch die einzelnen Pressbacken auf das Werkstück ausgeübten Presskräfte unabhängig voneinander zu steuern und zu regeln.

### Bezugszeichenliste

- 1: Härtemaschine
- 2: Werkstück
- 3: Induktor
- 4: Kalibriereinrichtung
- 5: Kalibrierdorn
- 5': Kalibrierfläche des Kalibrierdorns
- 6: Niederhalter
- 6': Auflagefläche des seitlichen Niederhalters
- 7: Kühlvorrichtung
- 7': Kühlmitte
- 8: Werkstückhalterung
- 9: Haltedorns
- 9': Haltefläche des Haltedorns
- 10: Haltedornführung
- 10': Auflagefläche
- 11: Kalibrierformen
- 12: verzahnter Kalibrierdorn
- 13: Zahnflanke
- 14: Zahngrund
- r1: Radius des Haltedorns
- r2: Radius der Haltefläche des Haltedorns
- r3: Radius der Kalibrierfläche des Kalibrierdorns
- T0: Ausgangstemperatur des Werkstücks
- T1: Temperatur für das Fixturhärten
- T2: Temperatur des abgeschreckten Werkstücks
- T3: Anlasstemperatur
- x: Achse

## Patentansprüche

1. Härtemaschine (1) zum Fixturhärten eines Werkstücks (2), wobei die Härtemaschine (1) einen Induktor (3) zum Erwärmen des in die Härtemaschine (1) eingebrachten Werkstücks (2) aufweist, wobei die Härtemaschine (1) eine Werkstückhalterung (8) für das Werkstück, eine Kühlvorrichtung (7) zum Abschrecken des erwärmten Werkstücks (2) und eine Kalibriereinrichtung (4) mit einer oder mehreren Kalibrierformen (11) zum Kalibrieren des Werkstücks (2) während des Abkühlvorgangs aufweist, wobei eine der einen oder mehreren Kalibrierformen (11) als Kalibrierdorn (5) ausgebildet ist, dass der Induktor (3) so ausgebildet ist, dass er relativ zu der einen oder den mehreren Kalibrierformen (11) der Kalibriereinrichtung (4) aus einer ersten entfernten Stellung in eine zweite Stellung bringbar ist, wobei der Induktor (3) mit dem in die Härtemaschine (1) eingebrachten, fixturgehärteten und an dem Kalibrierdorn (5) gehaltenen Werkstück (2) so zusammenwirkt, dass das Werkstück (2) an dem Kalibrierdorn (5) mittels des Induktors (3) erwärmbar ist.

2. Härtemaschine (1) nach Anspruch 1, **dadurch gekennzeichnet, dass** eine Werkstückhalterung (8) für das Werkstück (2) vorgesehen ist, und dass der Induktor (3) so in der Härtemaschine (1) angeordnet ist, dass das in der Werkstückhalterung (8) gehaltene Werkstück (2) mittels des Induktors (3) erwärmbar ist.

3. Härtemaschine (1) nach Anspruch 1 oder 2, **dadurch gekennzeichnet, dass** der Induktor (3) zur Erwärmung des Werkstücks (2) zumindest teilweise um das Werkstück (2) herum angeordnet oder das Werkstück (2) in die Nähe des Induktors (3) oder umgekehrt bringbar ist.

4. Härtemaschine (1) nach einem der Ansprüche 1 bis 3, **dadurch gekennzeichnet, dass** das an der Werkstückhalterung gehaltene Werkstück (2) und/oder das zumindest an einem Teil der einen oder mehreren Kalibrierformen (11) der Kalibriereinrichtung (4) gehaltene Werkstück drehbar ist, wobei die Drehzahl konstant oder variabel einstellbar ist.

5. Härtemaschine (1) nach einem der Ansprüche 1 bis 4, **dadurch gekennzeichnet, dass** eine Kühlvorrichtung (7) mit einem Kühlmittel (7'), insbesondere Kühlwasser oder eine Kühlemulsion auf Wasserbasis, vorgesehen ist.

6. Härtemaschine (1) nach Anspruch 5, **dadurch gekennzeichnet, dass** zumindest Teile der Kalibriereinrichtung (4) und/oder der Werkstückhalterung (8) Kanäle für das Kühlmittel (7') aufweisen.

7. Härtemaschine (1) nach Anspruch 6, **dadurch gekennzeichnet, dass** die Kanäle für das Kühlmittel (7') der Kalibriereinrichtung und/oder der Werkstückhalterung unabhängig voneinander durchströmt werden können.

8. Härtemaschine (1) nach einem der Ansprüche 1 bis 7, **dadurch gekennzeichnet, dass** der Induktor (3) ein Ringinduktor mit einer oder mehreren Windungen oder ein Halbschaleninduktor ist.

9. Härtemaschine (1) nach einem der Ansprüche 1 bis 8, **dadurch gekennzeichnet, dass** der Kalibrierdorn (5) glatt ist oder verzahnt ist, wobei bei einem verzahnten Kalibrierdorn (12) die Verzahnung mindestens einen Zahngrund (14) und/oder mindestens eine Zahnflanke (13) des zu kalibrierenden Werkstücks (2) abstützt.

10. Härtemaschine (1) nach einem der Ansprüche 1 bis 9, **dadurch gekennzeichnet, dass** der Kalibrierdorn (5) als Spreizdorn ausgeführt ist.

11. Verfahren zum Fixturhärten eines in eine Härtemaschine (1) eingebrachten Werkstücks (2), wobei das in die Härtemaschine (1) eingebrachte Werkstück (2) mittels Induktion erwärmt wird, wobei das induktiv erwärmte Werkstück (2) mit einem Kalibrierdorn (5) in Kontakt gebracht und abgeschreckt wird, wobei es auf den Kalibrierdorn (5) aufschrumpft und dass das in der Härtemaschine (1) auf den Kalibrierdorn (5) aufgeschrumpfte fixturgehärtete Werkstück (2) mittels Induktion auf eine Anlasstemperatur (T3) erwärmt wird.

12. Verfahren zum Fixturhärten nach Anspruch 11, **dadurch gekennzeichnet, dass** das Werkstück (2) vor dem Fixturhärten in einer Werkstückhalterung (8) der Härtemaschine (1) gehalten und mittels Induktion erwärmt wird.

13. Verfahren zum Fixturhärten nach Anspruch 11 oder 12, **dadurch gekennzeichnet, dass** das in die Härtemaschine (1) eingebrachte zumindest an einem Teil einer Kalibriereinrichtung (4) gehaltene Werkstück und/oder das in die Härtemaschine (1) eingebrachte in der Werkstückhalterung befindliche Werkstück (2) gedreht wird.

## Claims

1. Quenching machine (1) for fixture quenching a workpiece (2), wherein the quenching machine (1) has an inductor (3) for heating the workpiece (2) introduced into the quenching machine (1), wherein the quenching machine (1) has a workpiece holder (8) for the workpiece, a cooling apparatus (7) for quenching the heated workpiece (2) and a calibration device (4) with one or a plurality of calibration dies (11) for calibrating the workpiece (2) during the cooling process, wherein one of the one or plurality of calibration dies (11) is designed as a calibration mandrel (5), the inductor (3) is designed such that it can be brought from a first remote position into a second position relative to the one or to the plurality of calibration dies (11) of the calibration device (4), wherein the inductor (3) interacts with the workpiece (2), introduced into the quenching machine (1), fixture quenched and held on the calibration mandrel (5), such that the workpiece (2) can be heated at the calibration mandrel (5) by means of the inductor (3).

2. Quenching machine (1) according to claim 1, **characterized in that** a workpiece holder (8) is provided for the workpiece (2), and the inductor (3) is arranged in the quenching machine (1) such that the workpiece (2) held in the workpiece holder (8) can be heated by means of the inductor (3).

3. Quenching machine (1) according to claim 1 or 2, **characterized in that** the inductor (3) is arranged at least partially around the workpiece (2) for heating the workpiece (2) or the workpiece (2) can be brought into proximity of the inductor (3) or vice versa.

4. Quenching machine (1) according to any one of claims 1 to 3, **characterized in that** the workpiece (2), held on the workpiece holder, and/or the workpiece, held at least on a part of the one or the plurality of calibration dies (11) of the calibration device (4), is rotatable, wherein the rotational speed can be adjusted to be constant or variable.

5. Quenching machine (1) according to any one of claims 1 to 4, **characterized in that** a cooling apparatus (7) with a coolant (7'), in particular cooling water or a cooling emulsion with a water base, is provided.

6. Quenching machine (1) according to claim 5, **characterized in that** at least parts of the calibration device (4) and/or the workpiece holder (8) have channels for the coolant (7').

7. Quenching machine (1) according to claim 6, **characterized in that** the channels for the coolant (7') of the calibration device and/or the workpiece holder can be flowed through independently of each other.

8. Quenching machine (1) according to any one of claims 1 to 7, **characterized in that** the inductor (3) is a ring inductor with one or a plurality of windings, or is a semi-ring type inductor.

9. Quenching machine (1) according to any one of claims 1 to 8, **characterized in that** the calibration mandrel (5) is smooth or toothed, wherein, in the case of a toothed calibration mandrel (12), the toothing supports at least one tooth base (14) and/or at least one tooth flank (13) of the workpiece (2) to be calibrated.

10. Quenching machine (1) according to any one of claims 1 to 9, **characterized in that** the calibration mandrel (5) is designed as an expansion mandrel.

11. Method for fixture quenching a workpiece (2) introduced into a quenching machine (1), wherein the workpiece (2) introduced into the quenching machine (1) is heated by means of induction, wherein the inductively heated workpiece (2) is brought into contact with a calibration mandrel (5) and quenched, wherein it shrinks on the calibration mandrel (5) and the fixture-quenched workpiece (2), shrunk on the calibration mandrel (5) in the quenching machine (1), is heated to a tempering temperature (T3) by means of induction.

12. Method for fixture quenching according to claim 11, **characterized in that** the workpiece (2) is held in a workpiece holder (8) of the quenching machine (1) prior to the fixture quenching and is heated by means of induction.

13. Method for fixture quenching according to claim 11 or 12, **characterized in that** the workpiece, introduced into the quenching machine (1) and held on at least one part of a calibration device (4), and/or the workpiece (2), introduced into the quenching machine (1) and located in the workpiece holder, is rotated.

## Revendications

1. Machine de trempe (1) pour la trempe à la presse d'une pièce (2), dans laquelle la machine de trempe (1) présente un inducteur (3) pour chauffer la pièce (2) insérée dans la machine de trempe (1), dans laquelle la machine de trempe (1) présente un support de pièce (8) pour la pièce, un dispositif de refroidissement (7) pour tremper la pièce (2) chauffée et un dispositif de calibrage (4) avec un ou plusieurs moule(s) de calibrage (11) pour calibrer la pièce (2) pendant le refroidissement, dans laquelle un des un ou plusieurs moule(s) de calibrage (11) est conçu en tant que mandrin d'étalonnage (5), que l'inducteur (3) est ainsi conçu qu'il peut être amené, par rapport à l'un ou les plusieurs moule(s) de calibrage (11) du dispositif de calibrage (4), d'une première position éloignée à une seconde position, dans laquelle l'inducteur (3) coopère avec la pièce (2) insérée dans la machine de trempe (1), trempée à la presse et maintenue sur le mandrin de calibrage (5) de telle façon que la pièce (2) peut être chauffée sur le mandrin de calibrage (5) au moyen de l'inducteur (3).

2. Machine de trempe (1) selon la revendication 1, **caractérisée en ce qu'**un support de pièce (8) pour la pièce (2) est prévu et que l'inducteur (3) est ainsi disposé dans la machine de trempe (1) que la pièce (2) maintenue dans le support de pièce (8) peut être chauffée au moyen de l'inducteur (3).

3. Machine de trempe (1) selon la revendication 1 ou 2, **caractérisée en ce que** l'inducteur (3), pour réchauffer la pièce (2), est disposé au moins partiellement autour de la pièce (2) ou bien la pièce (2) peut être amenée à proximité de l'inducteur (3) ou inversement.

4. Machine de trempe (1) selon l'une des revendications 1 à 3, **caractérisée en ce que** la pièce (2) maintenue sur le support de pièce (2) et/ou la pièce maintenue au moins sur une partie de l'un ou des plusieurs moule(s) de calibrage (11) du dispositif de calibrage (4) est rotative, dans laquelle la vitesse peut être réglée constante ou variable.

5. Machine de trempe (1) selon l'une des revendications 1 à 4, **caractérisée en ce qu'**un dispositif de refroidissement (7) avec un réfrigérant (7'), en particulier de l'eau de refroidissement ou une émulsion de refroidissement à base d'eau, est prévu.

6. Machine de trempe (1) selon la revendication 5, **caractérisée en ce qu'**au moins des parties du dispositif de calibrage (4) et/ou du support de pièce (8) présentent des canaux pour le réfrigérant (7').

7. Machine de trempe (1) selon la revendication 6, **caractérisée en ce que** les canaux pour le réfrigérant (7') du dispositif de calibrage et/ou du support de pièce peuvent être traversés indépendamment l'un de l'autre.

8. Machine de trempe (1) selon l'une des revendications 1 à 7, **caractérisée en ce que** l'inducteur (3) est un inducteur annulaire avec une ou plusieurs spire(s) ou un inducteur à demi-coque.

9. Machine de trempe (1) selon l'une des revendications 1 à 8, **caractérisée en ce que** le mandrin de calibrage (5) est lisse ou denté, dans lequel pour un mandrin de calibrage denté (12), la denture appuie au moins un fond de dent (14) et/ou au moins un flanc de dent (13) de la pièce (2) à calibrer.

10. Machine de trempe (1) selon l'une des revendications 1 à 9, **caractérisée en ce que** le mandrin de calibrage (5) est conçu en tant que mandrin extensible.

11. Procédé pour la trempe à la presse d'une pièce (2) insérée dans une machine de trempe (1), dans lequel la pièce (2) insérée dans la machine de trempe (1) est chauffée par induction, dans lequel la pièce (2) chauffée par induction est mise en contact avec un mandrin de calibrage (5) et trempée, dans lequel elle rétrécit sur le mandrin de calibrage (5) et que la pièce (2) trempée à la presse rétrécie sur le mandrin de calibrage (5) dans la machine de trempe (1) est chauffée par induction à une température de revenu (T3).

12. Procédé de trempe à la presse selon la revendication 11, **caractérisé en ce que** la pièce (2), avant la trempe à la presse, est maintenue dans un support de pièce (8) de la machine de trempe (1) et chauffée par induction.

13. Procédé de trempe à la presse selon la revendication 11 ou 12, **caractérisé en ce que** la pièce (2) insérée dans la machine de trempe (1) maintenue au moins sur une partie d'un dispositif de calibrage (4) et/ou la pièce (2) insérée dans la machine de trempe (1) se trouvant dans le support de pièce, est tournée.
